# EUROPÄISCHE PATENTSCHRIFT

(11) **EP 1 118 407 B1**
(45) Veröffentlichungstag und Bekanntmachung des Hinweises auf die Patenterteilung: **16.03.2005**
(21) Anmeldenummer: 00125849.0
(22) Anmeldetag: 25.11.2000
(51) Int. Cl.: B23B 31/26

(54) **Spannvorrichtung für einen Hohlschaft**
Clamp apparatus for a hollow shank
Dispositif de serrage pour un arbre creux

(30) Priorität: 24.12.1999 DE 29922642 U
(43) Veröffentlichungstag der Anmeldung: 25.07.2001
(73) Patentinhaber: Röhm GmbH, 89567 Sontheim (DE)
(72) Erfinder: Hangleiter, Eugen, 89568 Hermaringen (DE)
(74) Vertreter: Hentrich, Swen Dipl.-Phys. Dr.

(56) Entgegenhaltungen:
- EP-A- 0 471 197
- EP-A- 0 901 859
- DE-U- 29 623 092
- US-A- 5 346 344

## Beschreibung

Die Erfindung betrifft eine Spannvorrichtung für einen Hohlschaft an einem Hohlschaftkegel, Werkzeug, Werkstück oder dergl., wobei der Hohlschaft in der Hohlschaftaufnahme geneigt verlaufende Spannschrägen aufweist, an denen durch einen axial verschieblichen, in der Arbeitsspindel geführten Spannkopf betätigbare, an der Arbeitsspindel gelagerte Spannklauen mit korrespondierend geneigten Schrägflächen zum Spannen zur Anlage kommen.

Eine derartige Spannvorrichtung ist aus der DE 41 38 974 A1 bekannt, bei der die Spannklauen durch eine über eine Zugstange vermittelte axiale Verstellung des Spannkopfes aus einer Position, in der sie außer Eingriff mit dem Hohlschaftkegel sind, in eine Position verstellt werden, in der die Spannklauen in Eingriff mit dem Hohlschaftkegel sind, der üblicherweise mittels einer Ladeeinrichtung der Spannvorrichtung zugeführt wird. Die Verbindung zwischen Ladeeinrichtung und Hohlschaftkegel kann dabei erst gelöst werden, wenn dieser von den Spannklauen sicher gehalten wird.

Der Erfindung liegt daher die Aufgabe zugrunde, eine Spannvorrichtung der eingangs genannten Art so auszubilden, daß die Zeitdauer für den Wechsel eines Hohlschaftkegels, eines Werkzeuges bzw. eines Werkstückes verkürzt werden kann.

Diese Aufgabe wird bei einer Spannvorrichtung der eingangs genannten Art dadurch gelöst, daß der Arbeitsspindel eine Haltezange zugeordnet ist, an der sich parallel zu den Spannklauen erstreckende, in radialer Richtung federnde Haltezungen ausgebildet sind, die zu den Spannschrägen korrespondierend geneigte Halteflächen aufweisen, die in der Ruhestellung der Haltezungen den Spannschrägen anliegen.

Diese Erfindung bietet den Vorteil, daß bei einem Aufschieben des nach DIN 69893 genormten Hohlschaftkegels auf die Spannvorrichtung die Haltezungen aufgrund ihrer federnden Eigenschaft zunächst dem Rand des Hohlschaftkegels ausweichen können, bis dieser axial weit genug auf die Spannvorrichtung aufgeschoben ist, so daß die Haltezungen an den Spannschrägen zur Anlage kommen. Infolge der Auslenkung aus ihrer Ruhelage verstellen sich die freien Enden der Haltezungen bei fehlender Abstützung durch den Rand des Hohlschaftkegels radial nach außen, wobei die Haltezungen über die an den Spannschrägen zur Anlage kommenden Halteflächen eine in axialer Richtung wirkende Einzugskraft erzeugen, mit der der Hohlschaftkegel bereits gehalten wird, bevor durch die Verstellung des Spannkopfes auch die Spannklauen an den Spannschrägen zur Anlage kommen. Der Hohlschaftkegel ist also in seiner Lage an der Spannvorrichtung früher gesichert, auch ohne daß die vollständige Spannkraft bereits aufgebracht ist, so daß die Ladevorrichtung frühzeitig gelöst werden kann und der Spannvorgang sich insgesamt verkürzt.

Im Rahmen der Erfindung ist weiterhin vorgesehen, daß die Spannklauen zu einer Segmentspannzange zusammengefaßt sind, die durch einen Sprengring in der Spannnut der Arbeitsspindel gehalten ist, da sich so die Montage der Spannvorrichtung mit der relativen Ausrichtung der Haltezange und der Segmentspannzange zueinander vereinfacht.

Im Rahmen der Erfindung hat sich weiterhin als vorteilhaft erwiesen, wenn die Haltezange einen in einer Nut der Arbeitsspindel plazierten Ringbund aufweist, von dem die Haltezungen sich zwischen die Spannklauen erstrecken. Durch diese Ausführungsform ist eine Gestaltung der Haltezange gegeben, die sich mit der Segmentspannzange durch einen einfachen Steckvorgang verbinden läßt.

Im Sinne einer großräumigen Verteilung der auf den Hohlschaft einwirkenden Kräfte ist es vorgesehen, daß die Haltezungen alternierend zu den Spannklauen gleichmäßig über den Umfang verteilt angeordnet sind, daß die Haltezungen im Querschnitt eine dreieckige Gestalt mit nach innen weisender Spitze besitzen, und daß die Spannklauen im Querschnitt in Umfangsrichtung gepfeilt gestaltet sind. Durch diese Gestaltung ergibt sich, daß unabhängig von der Stellung des Spannkopfes die Haltezungen randseitig durch die Spannklauen abgestützt und geführt sind, so daß nicht die Gefahr besteht, daß die Haltezungen seitlich ausweichen können.

Im folgenden wird die Erfindung an einem in der Zeichnung dargestellten Ausführungsbeispiel näher erläutert; es zeigen:
- Fig. 1: einen Längsschnitt durch das einen Hohlschaftkegel haltende axiale Ende einer Spannvorrichtung,
- Fig. 2: eine Vorderansicht auf das freie Ende einer Spannvorrichtung mit den Spannklauen, die infolge der axialen Stellung des Spannkopfes außer Eingriff mit den Spannschrägen sind,
- Fig. 3: eine der Fig. 1 entsprechende Darstellung einer Spannvorrichtung in der den Hohlschaft spannenden Stellung, und
- Fig. 4: eine der Fig. 2 entsprechende Darstellung in der den Hohlschaft spannenden Stellung.

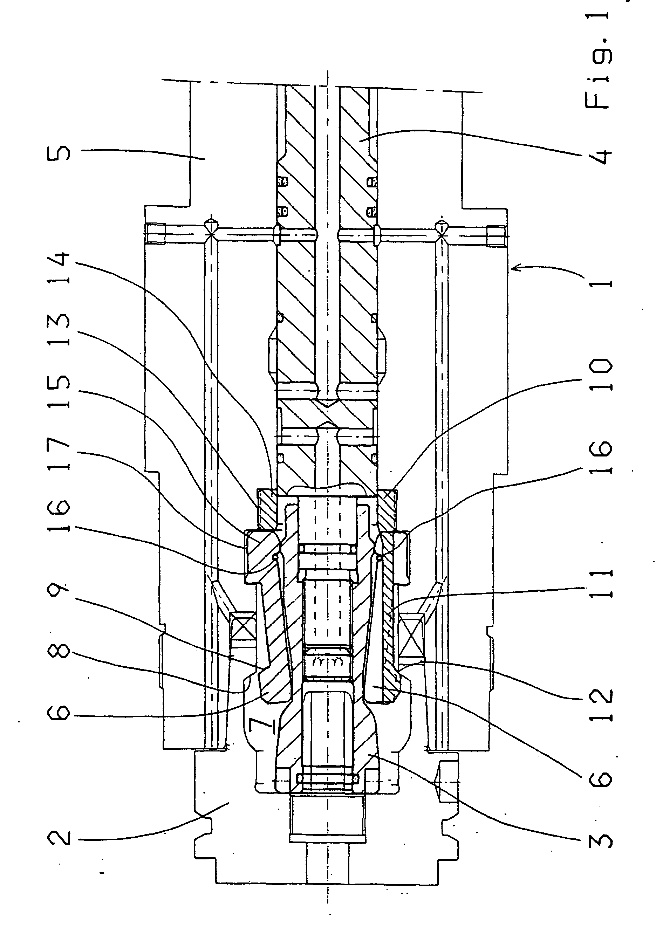

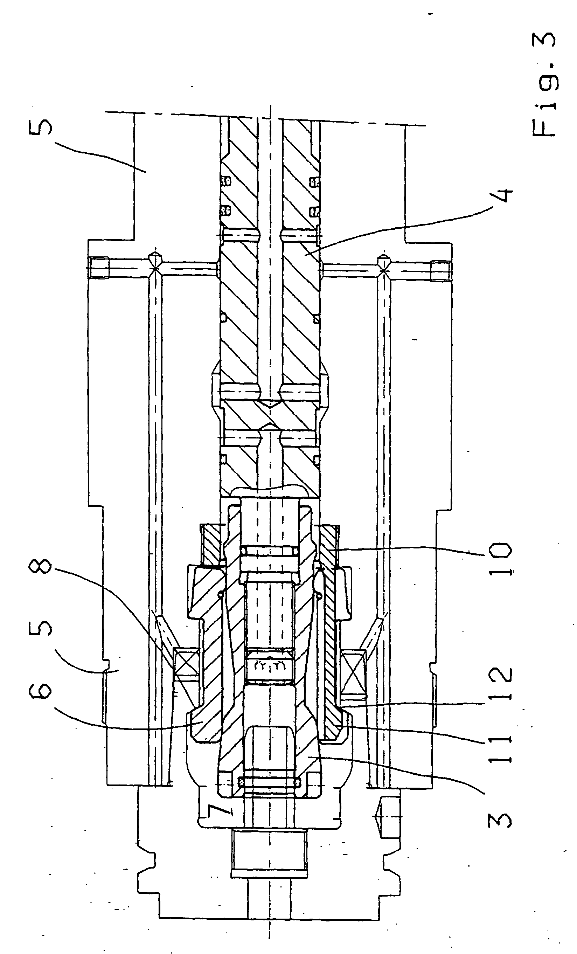

Von einer Spannvorrichtung 1, die aus der Technik bekannt und beispielsweise in DE 41 38 974 A1 beschrieben ist, daher hier nicht detailliert erläutert zu werden braucht, ist in der Fig. 1 das die Erfindung betreffende, einem Hohlschaftkegel 2 zugewandte axiale Ende gezeigt. Ein Spannkopf 3 ist mit einer Zugstange 4 verbunden, die in axialer Richtung der Arbeitsspindel 5 verstellbar ist, so daß der Spannkopf 3 aus der in der Fig. 1 gezeigten Lösestellung in die in Fig. 3 gezeigte Spannstellung überführbar ist, bei der die Spannklauen 6 in Eingriff mit dem Hohlschaftkegel 2 sind. In der Hohlschaftaufnahme 7 sind geneigt verlaufende Spannschrägen 8 ausgebildet, an denen die Spannklauen 6 mit korrespondierend geneigten Schrägflächen 9 zur Anlage kommen, wenn der Spannkopf 3 in Fig. 1 axial nach rechts verschoben wird, so daß die Spannklauen 6 aus der Verjüngung der Spannkopfes 3 heraus radial nach außen verstellt werden, um den Hohlschaftkegel 2 infolge der Neigung der Spannschrägen 8 und der Schrägflächen 9 weiter axial nach rechts zu verschieben und zu spannen.

Um auch vor dem vollständigen Spannen eine Lagesicherung des Hohlschaftkegels 2 bereit stellen zu können, ist gemäß der Erfindung der Arbeitsspindel 5 eine Haltezange 10 zugeordnet, an der sich parallel zu den Spannklauen 6 erstreckende, in radialer Richtung federnde Haltezungen 11 ausgebildet sind, die zu den Spannschrägen 8 korrespondierend geneigte Halteflächen 12 aufweisen, die in der Ruhestellung der Haltezunge 11 den Spannschrägen 8 anliegen. Die Haltezange 10 weist einen in einer Nut 13 der Arbeitsspindel 5 plazierten Ringbund 14 auf, von dem die Haltezungen 11 sich zwischen die Spannklauen 6 erstrecken, die zu einer Segmentspannzange 15 zusammengefaßt sind und gegenüber der Arbeitsspindel 5 durch einen Sprengring 16 in einer Spannnut 17 gesichert sind.

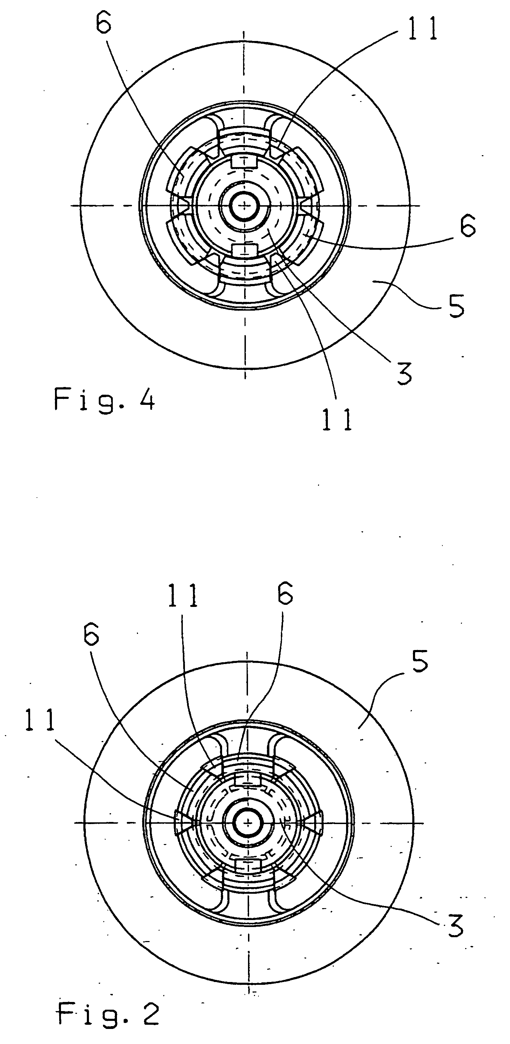

Wie aus den Fig. 2 und 4 zu erkennen ist, sind die Haltezungen 11 alternierend zu den Spannklauen 6 gleichmäßig über den Umfang verteilt angeordnet, wobei die Haltezungen 11 im Querschnitt eine dreieckige Gestalt mit nach innen weisender Spitze und die Spannklauen 6 im Querschnitt in Umfangsrichtung gepfeilt gestaltet sind, so daß unabhängig von der radialen Stellung der Spannklauen 6 diese die Haltezungen 11 seitlich abstützen.

Mit der erfindungsgemäßen Spannvorrichtung ergibt sich damit der nachfolgend beschriebene Spannvorgang. Zum Spannen des Hohlschaftkegels 2 befindet sich der Spannkopf 3 in der in Fig. 1 gezeigten axialen Stellung, bei der die Spannklauen 6 radial nach innen verstellt sind, so daß der Hohlschaftkegel 2 mit der Hohlschaftaufnahme 7 über den Spannkopf 3 aufgesteckt werden kann, bis der Rand der Hohlschaftaufnahme 7 auf die Haltezungen 11 trifft, diese radial nach innen verstellt und dabei als Federn spannt. Sobald der Hohlschaftkegel 2 soweit in axialer Richtung aufgesteckt ist, daß die Haltezungen 11 auf die Spannschrägen 8 treffen, wird der Hohlschaftkegel 2 durch die von den Haltezungen 11 ausgeübte Federkraft axial weiter eingezogen, und in dieser Lage gehalten, bis durch die Verstellung des Spannkopfes 3 die Spannklauen 6 in Eingriff mit den Spannschrägen 8 gelangen und die Lagesicherung übernehmen sowie die Spannkraft aufbringen.

Das Lösen erfolgt sinngemäß in umgekehrter Reihenfolge, bei der der Spannkopf 3 zunächst so verstellt wird, daß die Spannklauen 6 außer Eingriff kommen, woraufhin dann bei der axialen Verschiebung des Hohlschaftkegels 2 die Haltezungen 11 radial nach innen den Spannschrägen 8 ausweichen.

## Patentansprüche

1. Spannvorrichtung für einen Hohlschaft an einem Hohlschaftkegel (2), Werkzeug, Werkstück oder dergl., wobei der Hohlschaft in der Hohlschaftaufnahme (7) geneigt verlaufende Spannschrägen (8) aufweist, an denen durch einen axial verschieblichen, in der Arbeitsspindel (5) geführten Spannkopf (3) betätigbare, an der Arbeitsspindel (5) gelagerte Spannklauen (6) mit korrespondierend geneigten Schrägflächen (9) zum Spannen zur Anlage kommen, **dadurch gekennzeichnet, daß** der Arbeitsspindel (5) eine Haltezange (10) zugeordnet ist, an der sich parallel zu den Spannklauen (6) erstreckende, in radialer Richtung federnde Haltezungen (11) ausgebildet sind, die zu den Spannschrägen (8) korrespondierend geneigte Halteflächen (12) aufweisen, die in der Ruhestellung der Haltezungen (11) an den Spannschrägen (8) anliegen.

2. Spannvorrichtung nach Anspruch 1, **dadurch gekennzeichnet, daß** die Spannklauen (6) zu einer Segmentspannzange (15) zusammengefaßt sind, die durch einen Sprengring (16) in der Spannnut (17) der Arbeitsspindel (5) gehalten ist.

3. Spannvorrichtung nach Anspruch 1 oder 2, **dadurch gekennzeichnet, daß** die Haltezange (10) einen in einer Nut (13) der Arbeitsspindel (5) plazierten Ringbund (14) aufweist, von dem die Haltezungen (11) sich zwischen die Spannklauen (6) erstrecken

4. Spannvorrichtung nach einem der Ansprüche 1 bis 3, **dadurch gekennzeichnet, daß** die Haltezungen (11) alternierend zu den Spannklauen (6) gleichmäßig über den Umfang verteilt angeordnet sind, daß die Haltezungen (11) im Querschnitt eine dreieckige Gestalt mit nach innen weisender Spitze besitzen, und daß die Spannklauen (6) im Querschnitt in Umfangsrichtung gepfeilt gestaltet sind.

## Claims

1. Clamping device for a hollow shaft on a hollow shaft cone (2), tool, work piece or the like, wherein the hollow shaft has, in the hollow shaft receiver (7), clamping slopes (8) running at an incline, on which clamping claws (6), which can be actuated by an axially movable clamping head (3) held in the work spindle (5) and which have correspondingly inclined oblique surfaces (9), come to rest in order to effect clamping,
**characterised in that**
the work spindle (5) is assigned holding pincers (10), formed on which are holding tongues (11) which extend parallel to the clamping claws (6) and which spring in a radial direction, and which have holding surfaces (12) which are inclined correspondingly to the clamping slopes (8) and which rest against the clamping slopes (8) in the resting position of the holding tongues (11).

2. Clamping device in accordance with claim 1, **characterised in that** the clamping claws (6) are combined into segment clamping pincers (15) which are held by a snap ring (16) in the clamping groove (17) of the work spindle (5).

3. Clamping device in accordance with claim 1 or 2, **characterised in that** the holding pincers (10) have a ring collar (14) placed in a groove (13) of the work spindle (5), from which [collar] the holding tongues (11) extend between the clamping claws (6).

4. Clamping device in accordance with one of the claims 1 to 3, **characterised in that** the holding tongues (11) are arranged evenly distributed over the circumference, alternating with the clamping claws (6), that the holding tongues (11) have a cross-section of a triangular shape with the tip pointing inwards, and that in respect of their cross-section the clamping claws (6) are designed swept back in the circumferential direction.

## Revendications

1. Dispositif de serrage d'un arbre creux au niveau d'un cône d'arbre creux (2), d'un outil, d'une pièce ou similaire, l'arbre creux présentant à l'intérieur du logement d'arbre creux (7) des chanfreins de serrage (8) inclinés, contre lesquels des griffes de serrage (6) qui sont logées dans la broche de travail (5), sont pourvues de surfaces inclinées (9) adaptées et sont actionnées par une tête de serrage (3) guidée avec possibilité de coulissement dans la direction axiale dans la broche de travail (5), prennent en appui à des fins de serrage, **caractérisé par le fait qu'**à la broche de travail (5) est associée une pince de retenue (10) sur laquelle sont aménagées des bras de retenue (11) élastiques dans la direction radiale, qui s'étendent parallèlement aux griffes de serrage (6) et présentent des surfaces de retenue (12) inclinées correspondant aux chanfreins de serrage (8), qui sont en appui sur les chanfreins de serrage (8) dans la position de repos des bras de retenue (11).

2. Dispositif de serrage selon la revendication 1, **caractérisé par le fait que** les griffes de serrage (6) sont regroupées en une pince de serrage à segments (15) qui est tenue dans la gorge de serrage (17) de la broche de travail (5) par un anneau élastique (16).

3. Dispositif de serrage selon la revendication 1 ou 2, **caractérisé par le fait que** la pince de serrage (10) présente un collet (14) annulaire disposé dans une gorge annulaire (13) de la broche de travail (5), à partir duquel les bras de retenue (11) s'étendent entre les griffes de serrage (6).

4. Dispositif de serrage selon une des revendications 1 à 3, **caractérisé par le fait que** les bras de retenue (11) sont répartis régulièrement en alternance avec les griffes de serrage (6) sur le pourtour, que les bras de retenue (11), en section transversale, ont une forme de triangle avec la pointe dirigée vers l'intérieur et que les griffes de serrage (6), en section transversale, sont conformées en flèche dans la direction périphérique.
